Europäisches Patentamt

European Patent Office

Office européen des brevets

(11) Veröffentlichungsnummer: **0 220 498 B1**

(12) **EUROPÄISCHE PATENTSCHRIFT**

(45) Veröffentlichungstag der Patentschrift: **15.05.91**

(51) Int. Cl.⁵: **G01F 23/28**

(21) Anmeldenummer: **86113162.1**

(22) Anmeldetag: **24.09.86**

(54) **Einrichtung zur Erfassung des Füllstandes in einem Behälter sowie Behälter mit einer solchen.**

(30) Priorität: **31.10.85 DE 3538741**

(43) Veröffentlichungstag der Anmeldung:
**06.05.87 Patentblatt 87/19**

(45) Bekanntmachung des Hinweises auf die
Patenterteilung:
**15.05.91 Patentblatt 91/20**

(84) Benannte Vertragsstaaten:
**DE FR GB SE**

(56) Entgegenhaltungen:
**FR-A- 2 328 951**
**GB-A- 988 576**
**US-A- 4 264 788**

(73) Patentinhaber: **VDO Adolf Schindling AG**
**Gräfstrasse 103**
**W-6000 Frankfurt/Main 90(DE)**

(72) Erfinder: **Ziegler, Klaus**
**Am Hofrain 8**
**W-7743 Furtwangen 6(DE)**
Erfinder: **Liebl, Reiner**
**Schützenstrasse 17**
**W-6231 Schwalbach a. T.(DE)**

(74) Vertreter: **Klein, Thomas, Dipl.-Ing. (FH)**
**Sodener Strasse 9 Postfach 6140**
**W-6231 Schwalbach a. Ts.(DE)**

## Beschreibung

Die Erfindung bezieht sich auf eine Einrichtung zur Erfassung des Füllstandes einer Flüssigkeit in einem Behälter, mit einer Membran, welche mit einer Seite der Flüssigkeit zugewandt ist und die auf ihrer anderen Seite einen elektromechanischen Wandler aufweist, durch den die Membran in Schwingungen versetzbar ist, die durch die auf die Membran einwirkende Flüssigkeit gedämpft werden, so daß das unterschiedliche Schwingungsverhalten bei Vorhandensein oder Fehlen von Flüssigkeit erfaßbar ist. Aus der GB-A-988 576 ist eine ähnlich wirkende Einrichtung zur Messung des Füllstandes von Massenschüttgütern bekannt.

Einrichtungen der im Oberbegriff genannten Art werden zum Beispiel in Kraftfahrzeugtanks eingesetzt, um bei Unterschreiten eines Mindestfüllstandes ein Warnsignal erzeugen zu können. Die Wirkung dieser Einrichtungen beruht darauf, daß die Schwingungen der Membran durch die auf sie wirkende Flüssigkeit gedämpft werden. Das unterschiedliche Schwingungsverhalten bei Vorhandensein oder Fehlen von Flüssigkeit wird in einer Auswerteinrichtung erfaßt, so daß das gewünschte Warnsignal erzeugt werden kann.

In Kraftfahrzeugtanks und auch in anderen Behältern tritt das Problem auf, daß beim Einfüllen von Flüssigkeit, insbesondere beim erstmaligen Befüllen, relativ viel Luft und Gas in die Flüssigkeit gelangt. Gas- oder Luftblasen können sich dann auf der der Flüssigkeit zugewandten Seite der Membran absetzen, was dazu führt, daß die Membran leichter schwingen kann, als wenn sie vollständig von der Flüssigkeit abgedeckt wäre. Es kommt dann leicht zu einer Fehlanzeige.

Aus der US-A-4 264 788 ist eine berührungslos messende Einrichtung mit einem Ultraschallwandler bekannt, der in einem Rohr angeordnet ist. Dabei handelt es sich jedoch um einen senkrecht eingebauten Hornstrahler, der die unkontrollierte Ausbreitung der erzeugten Ultraschallwellen und die Bildung von unerwünschten Wandechos unterdrücken soll.

Der Erfindung liegt die Aufgabe zugrunde, eine Einrichtung der eingangs genannten Art zu schaffen, bei der die Gefahr einer Fehlanzeige infolge des Anlagerns von Luft- oder Gasblasen an der Membran vermieden ist. Weiterhin soll ein Behälter mit einer solchen Einrichtung geschaffen werden.

Die erstgenannte Aufgabe wird erfindungsgemäß dadurch gelöst, daß die Membran in einem im wesentlichen waagrecht verlaufenden stirnseitig offenen Schutzrohr angeordnet ist, welches zur Flüssigkeit hin über die Membran hinausragt, derart, daß die in der Flüssigkeit aufsteigenden Luft oder Gasblasen von der Membran ferngehalten werden.

Durch diese erfindungsgemäße Gestaltung können die in der Flüssigkeit aufsteigenden Luft- und Gasblasen nicht mehr an die Membran gelangen. Dadurch ist ein Anlagern der Gas- und Luftblasen an der Membran und mithin ein Fehlalarm der Einrichtung durch einen solchen Vorgang ausgeschlossen. Kostenmäßig hat das Schutzrohr kaum Bedeutung, so daß sich dieser Vorteil ohne nennenswerte Mehrkosten gegenüber herkömmlichen Einrichtungen erzielen läßt.

Um sicherzustellen, daß nach einem Absinken der Flüssigkeit unter das Niveau der Einrichtung keine Flüssigkeit im Schutzrohr verbleibt und dadurch einen höheren Füllstand vortäuscht, ist es vorteilhaft, wenn das Schutzrohr innenseitig eine zur offenen Stirnseite mit Gefälle verlaufende Ablaufschräge aufweist.

Besonders einfach ist das Ablaufen von Flüssigkeit aus dem Schutzrohr zu erreichen, wenn gemäß einer vorteilhaften Ausgestaltung der Erfindung die Ablaufschräge Teil einer konischen Erweiterung des Schutzrohres von der Membrane zur offenen Stirnseite hin ist. Diese Erweiterung bietet zusätzlich den Vorteil, daß im Schutzrohr entstehende Gas- oder Luftbläschen sich nach außen aus ihm heraus bewegen können.

Vorteilhaft ist es auch, wenn das Schutzrohr an seiner in Einbaulage oben liegenden Mantellinie in dem von Flüssigkeit benetzbaren Bereich eine Öffnung in der Rohrwand aufweist. Durch diese Öffnungen können Gasblasen, die innerhalb des Schutzrohres aus der Flüssigkeit entstehen, beispielsweise infolge einer starken Temperaturerhöhung, nach oben hin entweichen, so daß sie sich nicht an der Membran anlagern.

Einen wirksamen Schutz vor von unten aufsteigenden Gas- und Luftblasen und gleichzeitig eine ungehinderte Aufstiegsmöglichkeit für sich unmittelbar vor der Membran bildende Gas- und Luftblasen erreicht man, wenn das Schutzrohr in den von Flüssigkeit benetzbaren Bereich die Gestalt einer nach oben offenen Rinne aufweist.

Die zweitgenannte Aufgabe, nämlich die Schaffung eines Behälters mit einer Einrichtung zur Erfassung des Füllstandes einer Flüssigkeit mit einer Membran, welche mit einer Seite der Flüssigkeit zugewandt ist und die auf ihrer anderen Seite einen elektromechanischen Wandler aufweist, durch den die Membran in Schwingungen versetzbar ist, die durch die auf die Membran einwirkende Flüssigkeit gedämpft werden, so daß das unterschiedliche Schwingungsverhalten bei Vorhandensein oder Fehlen von Flüssigkeit erfaßbar ist, wird erfindungsgemäß dadurch gelöst, daß die Wandung des Behälters zur Aufnahme der Einrichtung zur Füllstandserfassung ein nach innen gerichtetes waagrecht verlaufendes Rohrstück aufweist, welches bei montierter Einrichtung über die Membran der Einrichtung hinaus ragt und dadurch ein Schutzrohr für die Membran, derart bildet, daß die in der Flüssigkeit aufsteigenden Luft- oder Gasblasen von der Membran ferngehalten werden. Ein solcher Behälter ist sehr kostengünstig herstellbar, weil das Rohrstück zugleich eine Aufnahme für die Einrichtung als auch das Schutzrohr zur Verhinderung des Anlagerns von Gas- und Luftblasen bildet.

Die Erfindung läßt zahlreiche Ausführungsformen zu. Drei davon sind in der Zeichnung dargestellt und werden nachfolgend beschrieben. In der Zeichnung zeigen:

Fig. 1  einen teilweisen Längsschnitt durch die erfindungsgemäße Einrichtung,

Fig. 2  eine Ansicht von vorn auf eine zweite Ausführungsform der erfindungsgemäßen Einrichtung.

Fig. 3  einen die Erfindung betreffenden Bereich eines Behälters mit der erfindungsgemäßen Einrichtung, in Schnittdarstellung.

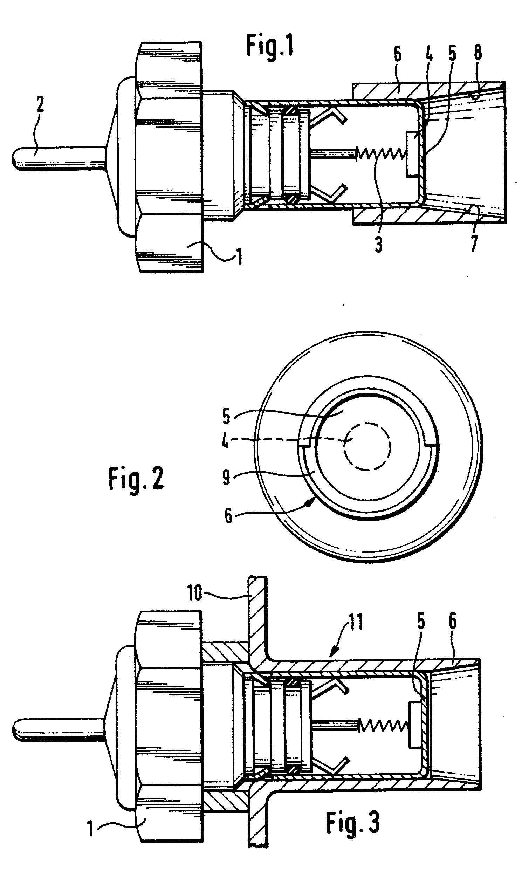

Die in der Figur 1 dargestellte Einrichtung weist eine Halterung 1 auf, mit der die Einrichtung an einer nicht dargestellten Wand eines Flüssigkeitsbehälters befestigbar ist. An der Halterung 1 ist ein nach außerhalb des Flüssigkeitsbehälters ragender elektrischer Anschluß 2 angeordnet, der über eine flexible, elektrische Leitung 3 mit einem elektromechanischen Wandler 4 verbunden ist, bei dem es sich üblicherweise um ein Piezoelement handelt. Im eingebauten Zustand ragt der zum elektromechanischen Wandler 4 gerichtete Teil der Einrichtung in den Flüssigkeitsbehälter. Der Wandler 4 ist fest auf der Innenseite einer Membran 5 angeordet, deren Außenseite der Flüssigkeit zugewandt ist.

Für die Erfindung wichtig ist ein Schutzrohr 6, welches vergleichbar mit einer Gegenlichtblende eines Fotoapparates über die Membran 5 hinaus in den Flüssigkeitsbehälter ragt. Dieses Schutzrohr 6 hat auf seiner Unterseite eine Ablaufschräge 7, die nach vorn hin Gefälle hat, so daß sich in dem Schutzrohr 6 keine Flüssigkeit bilden kann. Die Ablaufschräge 7 kann durch eine einzelneRinne aber auch dadurch gebildet sein, daß das Schutzrohr 6 innenseitig eine konische Erweiterung 8 hat, was in der Figur 1 gezeigt ist.

Die Ausführungsform nach der Figur 2 unterscheidet sich von der zuvor beschriebenen dadurch, daß das Schutzrohr 6 zumindest in dem vor der Membran 5 liegenden Bereich als Halbschale 9 ausgebildet ist. Diese ist nach vorn und oben hin offen. Dadurch können von unten her keine Luft- und Gasblasen an die Membran 5 gelangen.

Nicht dargestellt ist eine Ausführungsform, bei der das Schutzrohr 6 nach oben hin zwar im wesentlichen geschlossen ist, an der höchsten Stelle jedoch zumindest eine Öffnung hat, damit Gas- und Luftblasen aus dem Schutzrohr 6 gelangen können.

Die Figur 3 zeigt von einem Behälter einen Teilbereich einer Wandung 10, welche einstückig mit einem nach innen gerichteten Rohrstück 11 ausgebildet ist. Dieses Rohrstück 11 nimmt die erfindungsgemäße Einrichtung auf. Es ist länger, als die Einrichtung in den Behälter zu ragen vermag, so daß sich die Membran 5 der Einrichtung innerhalb des Rohrstückes 11 befindet. Dadurch bildet der behälterinnenseitige Teil des Rohrstükes 11 das anhand der vorangegangenen Ausführungsformen erläuterte Schutzrohr 6.

## Ansprüche

1. Einrichtung zur Erfassung des Füllstandes einer Flüssigkeit in einem Behälter, mit einer Membran (5), welche mit einer Seite der Flüssigkeit zugewandt ist und die auf ihrer anderen Seite einen elektromechanischen Wandler (4) aufweist, durch den die Membran (5) in Schwingungen versetzbar ist, die durch die auf die Membran (5) einwirkende Flüssigkeit gedämpft werden, so daß das unterschiedliche Schwingungsverhalten bei Vorhandensein oder Fehlen von Flüssigkeit erfaßbar ist, wobei die membran (5)in einem im wesentlichen waagrecht verlaufenden stirnseitig offenem Schutzrohr (6) angeordnet ist, welches zur Flüssigkeit hin über die Membran (5) hinausragt, derart, daß die in der Flüssigkeit aufsteigenden Luftoder Gasblasen von der Membran (5) ferngehalten werden.

2. Einrichtung nach Anspruch 1, dadurch gekennzeichnet, daß das Schutzrohr (6) in seinem der Flüssigkeit zugewandten Bereich innenseitig eine zur offenen Stirnseite mit Gefälle verlaufende Ablaufschräge (7) aufweist.

3. Einrichtung nach Anspruch 2, dadurch gekennzeichnet, daß die Ablaufschräge (7) Teil einer konischen Erweiterung (8) des Schutzrohres von der Membrane (5)zur offenen Stirnseite hin ist.

4. Einrichtung nach einem oder mehreren der vorangehenden Ansprüche, dadurch gekennzeichnet, daß das Schutzrohr (6) an seiner in Einbaulage oben liegenden Mantellinie in dem von Flüssigkeit benetzbaren Bereich eine Öffnung in der Rohrwand aufweist.

5. Einrichtung nach einem oder mehreren der Ansprüche 1 bis 3, dadurch gekennzeichnet, daß das Schutzrohr (6) in dem von Flüssigkeit benetzbaren Bereich die Gestalt einer nach oben offenen Rinne (9) aufweist.

6.  Behälter mit einer Einrichtung zur Erfassung des Füllstandes einer Flüssigkeit mit einer Membran (5), welche mit einer Seite der Füssigkeit zugewandt ist und die auf ihrer anderen Seite einen elektromechanischen Wandler (4) aufweist, durch den die Membran (5) in Schwingungen versetzbar ist, die durch die auf die Membran (5) einwirkende Flüssigkeit gedämpft werden, so daß das unterschiedliche Schwingungsverhalten bei Vorhandensein oder Fehlen von Flüssigkeit erfaßbar ist, wobei die Wandung des Behälters zur Aufnahme der Einrichtung zur Füllstandserfassung ein nach innen gerichtetes waagrecht verlaufendes Rohrstück (11) aufweist, welches bei montierter Einrichtung über die Membran (5) der Einrichtung hinausragt und dadurch ein Schutzrohr (6) für die Membran (5), derart bildet, daß die in der Flüssigkeit aufsteigenden Luft- oder Gasblasen von der Membran (5) ferngehalten werden.

## Claims

1.  Device for measuring the level of a liquid in a container with a diaphragm (5), one side of which faces towards the liquid and the other side of which has an electro-mechanical transducer (4) by which the diaphragm (5) can be displaced into oscillations which are damped by the liquid acting on the diaphragm (5), with the result that the differing oscillation behaviour in the presence or absence of liquid can be measured, in which the diaphragm (5) is located in an essentially horizontal protective tube (6) open at the end, which projects beyond the diaphragm (5) into the liquid in such a way that the air or gas bubbles rising in the liquid are kept away from the diaphragm (5).

2.  Device according to Claim 1, characterized in that the inside of the region of the protective tube (6) facing towards the liquid has a drainage slope (7) with a fall towards the open end.

3.  Device according to Claim 2, characterized in that the drainage slope (7) is part of a conical extension (8) of the protective tube from the diaphragm (5) towards the open end.

4.  Device according to one or more of the preceding Claims, characterized in that the protective tube (6) has an opening in the tube wall at the surface line which is uppermost in the installed position in the region which is wetted by the liquid.

5.  Device according to one or more of Claims 1 to 3, characterized in that the region of the protective tube (6) which can be wetted by liquid has the shape of a channel (9) which is open at the top.

6.  Container with a device for measuring the level of a liquid with a diaphragm (5), one side of which faces towards the liquid and the other side of which has an electro-mechanical transducer (4) by which the diaphragm (5) can be displaced into oscillations which are damped by the liquid acting on the diaphragm (5), with the result that the differing oscillation behaviour in the presence or absence of liquid can be measured, in which the wall of the container for holding the device for measuring the level has an inward-pointing horizontal pipe section (11) which, when the device is installed, projects beyond the diaphragm (5) of the device and in this way forms a protective tube (6) for the diaphragm (5) such that the air or gas bubbles rising in the liquid are kept away from the diaphragm (5).

## Revendications

1.  Dispositif de saisie (ou de détermination) du niveau (de remplissage) d'un liquide contenu dans un récipient, ce dispositif comportant une membrane (5) dont un côté est orienté vers le liquide et qui présente sur son autre côté un dispositif (4) de conversion électromécanique, au moyen duquel la membrane (5) peut être mise en vibration, lesquelles vibrations peuvent être amorties par le liquide qui agit sur la membrane (5), de façon telle que la différence de comportement vibratoire, selon qu'il y a présence ou absence de liquide, peut être saisie, la membrane (5) étant disposée dans un tube protecteur (6) sensiblement horizontal, ouvert du côté frontal, qui dépasse au-delà de la membrane (5), de façon telle que les bulles d'air ou de gaz qui s'élèvent dans le liquide sont maintenues à l'écart de la membrane (5).

2.  Dispositif selon la revendication 1, caractérisé par le fait que le tube protecteur (6) présente, dans sa zone dirigée vers le liquide, du côté intérieur, une rampe (7) d'écoulement en pente en direction du côté frontal ouvert.

3.  Dispositif selon la revendication 2, caractérisé par le fait que la rampe (7) d'écoulement constitue une partie d'un élargissement (8) conique du tube protecteur allant de la membrane (5) au côté frontal ouvert.

4. Dispositif selon une ou plusieurs des revendications précédentes, caractérisé par le fait que le tube protecteur (6) présente, dans la zone susceptible d'être mouillée par le liquide, sur sa génératrice située en haut dans la position de montage, une ouverture dans la paroi tubulaire.

5. Dispositif selon une ou plusieurs des revendications 1 à 3, caractérisé par le fait que le tube protecteur (6) présente, dans la zone susceptible d'être mouillée par le liquide, la forme d'une rigole (9) ouverte vers le haut.

6. Récipient comportant un dispositif destiné à la saisie du niveau (de remplissage) d'un liquide, au moyen d'une membrane (5) qui est orientée d'un côté vers le liquide, et qui présente de l'autre côté un convertisseur (4) électromécanique, au moyen duquel la membrane (5) est mise en vibration, lesdites vibrations étant amorties du fait de l'action du liquide sur la membrane (5) de façon telle que la différence de comportement vibratoire peut être détectée selon qu'il y a présence ou absence de liquide, la paroi du récipient présentant, en vue de recevoir le dispositif de saisie de niveau (de remplissage), une pièce tubulaire (11) horizontale orientée vers l'intérieur, qui, le dispositif étant monté, dépasse au-delà de la membrane (5) du dispositif et, de ce fait, forme pour la membrane (5) un tube protecteur (6), de façon telle que les bulles d'air ou de gaz, qui s'élèvent dans le liquide, sont maintenues à l'écart de la membrane (5).

Fig.1

Fig.2

Fig.3